Europäisches Patentamt

European Patent Office

Office européen des brevets

(11) Veröffentlichungsnummer: **0 483 473 A2**

## EUROPÄISCHE PATENTANMELDUNG

(21) Anmeldenummer: **91114131.5**

(22) Anmeldetag: **23.08.91**

(51) Int. Cl.5: **B62D 7/20**, B62D 7/22,
F16C 7/04

(30) Priorität: **02.11.90 DE 4034891**

(43) Veröffentlichungstag der Anmeldung:
**06.05.92 Patentblatt 92/19**

(84) Benannte Vertragsstaaten:
**DE ES FR GB IT NL SE**

(71) Anmelder: **Dr.Ing.h.c. F. Porsche AG**
**Postfach 40 06 40**
**W-7000 Stuttgart 40(DE)**

(72) Erfinder: **Schaible, Walter**
**Schauchertstrasse 73**
**W-7251 Hemmingen(DE)**

(54) **Spurstange.**

(57) Eine zwischen einem Radträger und einem Lenkgetriebe angeordnete Spurstange ist elastisch ausgeführt, in der Weise, daß jedes Stangenteilende über ein elastomeres Federelement in einer zylindrischen Außenhülse gehalten ist. Schwingungsbewegungen der Stangenteile, sei es vom Rad oder vom Lenkgetriebe, werden über die Federelemente aufgenommen, wobei eingesetzte Spiralfedern bzw. elastomere Federelemente die Stangenteile von der Arbeitsstellung in eine Grundstellung zurückbewegen.

Die Erfindung bezieht sich auf eine Spurstange nach dem Oberbegriff des Anspruchs 1.

Aus dem DE-GM 77 18 994 ist eine Spurstange für die Lenkung eines Kraftfahrzeugs mit einem Dämpfungsglied bekannt. Dies umfasst ein in einem elastomeren Federelement gehaltenes Spurstangenteil, das bei Belastung eine elastische axiale Bewegung ausführen kann.

Aufgabe der Erfindung ist es, ein verbessertes Dämpfungsglied für eine Spurstange zu schaffen, das entsprechend der auftretenden Kräfte am Rad definiert abstimmbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die Wirkung von unelastischen Lenkhebeln und starr verschraubten Lenkgetrieben durch eine elastische Spurstange aufgehoben wird und somit Fahrbahnunebenheiten direkt auf die Lenkung, d.h. auf das Lenkhandrad übertragen werden. Auch sind Einlenkungen in die Kurve harmonischer und nicht so "eckig" und bei einem Spurwechsel kann das Fahrzeug nicht so direkt reagieren.

Durch die Kennungen der elastomeren Federelemente sowie der Kennungen der aus Spiralfedern bestehenden weiteren Federelemente, kann die Gesamtkennung aus diesen Federelementen entsprechend den Gegebenheiten bzw. entsprechend an die auftretenden Kräfte angepasst werden. Insbesondere wird durch die Spiralfedern das Kraftniveau bestimmt, bei welchem die Spurstange in Zug- oder Druckrichtung beginnt, sich zu verlängern oder zu verkürzen.

Die Spiralfedern bewirken eine definierte Rückstellung der Stangenteile in eine Grundposition aus einer ausgelenkten Zug- oder Druckstellung der Spurstange, wobei die Gummihysterese ausgleichbar ist.

Die Elastizität der Spurstange insgesamt wird durch die Kombination des elastischen Federelements mit der Spiralfeder erzielt. Denkbar ist auch die Erzielung einer Elastizität der Spurstange ausschließlich über elastomere Federelemente oder ausschließlich über Spiralfedern.

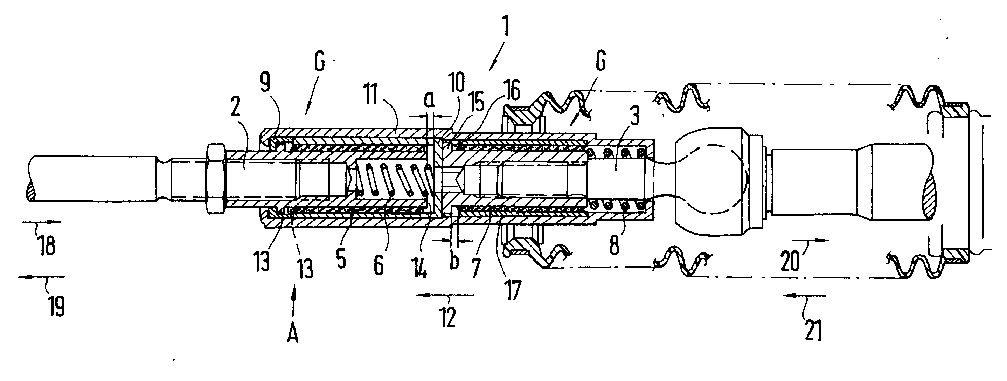

Ein Ausführungsbeispiel der Erfindung ist in der Zeichnung dargestellt, die eine Spurstange mit Dämpfungsglied im Schnitt zeigt.

Die Spurstange 1 für die Lenkung eines Kraftfahrzeugs umfasst im wesentlichen zwei Stangenteile 2 und 3, die innerhalb einer zylindrischen Außenhülse 11 mittels elastomeren Federelementen 5, 7 und Federelementen nach Art von Spiralfedern 6, 8 im wesentlichen elastisch axial bewegbar gehalten sind und eine Kräfte übertragende Einheit ergeben.

Das eine Stangenteil 2 ist mit einem Radträger einer Radaufhängung und das andere Stangenteil 3 ist mit einem Lenkgetriebe verbunden. Beide Stangenteile 2 und 3 sind koaxial zueinander angeordnet und in einer Grundstellung G, wie dargestellt, an ortsfesten Anschlägen 9, 10 der zylindrischen Außenhülse 11 abgestützt. Aus diesen Grundstellungen G heraus sind die Stangenteile 2 und 3 in Arbeitsstellungen A entgegen der Grundstellung elastisch bewegbar gehalten.

Wie die Zeichnung näher zeigt, sind die Stangenteile 2 und 3 mit der Außenhülse 11 über die elastomeren Federelemente 5 und 7 verbunden. Zur Positionierung der Stangenteile 2 und 3 in der Grundstellung G dienen die Spiralfedern 6 und 8, wobei diese die Stangenteile 2 und 3 jeweils in Pfeilrichtung 12 zu drücken und zu halten suchen.

Nach einer nicht gezeigten Ausführungsform der Erfindung kann das elastomere Federelement auch aus einer Spiralfeder bestehen oder es wird nur die Spiralfeder 6 und 8 verwendet und das Stangenteil wird in der zylindrischen Außenhülse 11 axial geführt.

Die Federkennungen der elastomeren Federelemente 5 und 7 können den Federkennungen der Spiralfedern 6 und 8 so überlagert sein, daß eine definiert auf den speziellen Anwendungsfall abgestimmte Gesamtkennung erzielbar ist.

In der Grundstellung G ist das radträgerseitige Stangenteil 2 mit einem Ringbund 13 am Anschlag 9 der Außenhülse 11 unter Vorspannung der Spiralfeder 6 abgestützt. In dieser Position G weist die Stirnfläche 14 des Stangenteils 2 einen Abstand a zum ortsfesten Anschlag 10 in der Außenhülse 11 auf, der durch eine Anschlagscheibe gebildet wird.

In der Grundstellung G ist das lenkgetriebeseitige Stangenteil 3 mit einem stirnseitigen Ringbund 15 unter Vorspannung der Feder 8 an der Anschlagscheibe 10 abgestützt. Gleichzeitig weist in dieser Stellung G die rückseitige Fläche 16 der Anschlagscheibe 10 einen Abstand b zu einer Innenhülse 17 auf, die in der Außenhülse 11 axial und radial ortsfest fixiert festgesetzt ist.

Bei einem auf Druck in Pfeilrichtung 18 beanspruchten Stangenteil 2 wird sich dieses entgegen der Spiralfeder 6 elastisch zu bewegen versuchen, wobei oszillierende Bewegungen im elastischen Federelement 5 aufgenommen werden, ohne daß Schwingungen auf das Lenkhandrad einwirken können. Bei einer Zugbeanspruchung in Pfeilrichtung 19 wird über den stangenseitigen Bund 13 eine elastische Bewegung der Außenhülse 11 gegenüber dem Stangenteil 3 innerhalb des elastomeren Federelements 7 und gegen die Spannung der Spiralfeder 8 vorgenommen, wobei der Weg b zwischen dem Bund 15 des Stangenteils 3 und der Innenhülse 17 zur Verfügung steht.

Bei einer Zugbeanspruchung des Stangenteils 3 in Pfeilrichtung 20 bewegt sich dieses entgegen der Vorspannung aus der Spiralfeder 8 innerhalb der gegebenen Elastizität im elastischen Federelement 7. Bei einer Druckbeanspruchung des Stangenteils 3 in Pfeilrichtung 21 erfolgt eine elastische Aufnahme innerhalb des Federelements 5 und gegen die Spiralfeder 6, wobei der Weg a zur Verfügung steht.

Da sich überlagernde Schwingungen an den Stangenteilen 2 und 3 auftreten, können sich diese innerhalb der vorgegebenen Elastizitäten nahezu entkoppelt zueinander bewegen, so daß stärkere Schwingungen durch Aufbauvibrationen sich nicht auf das Rad bzw. durch auf das Rad einwirkende Kräfte auf das Lenkhandrad auswirken können.

**Patentansprüche**

1. Spurstange für die Lenkung eines Kraftfahrzeuges mit einem elastischen Dämpfungsglied, das auf Druck und Zug beanspruchbare elastomere Federelemente umfasst, **dadurch gekennzeichnet**, daß in einem ersten Federelement (5) ein mit einem Radträger verbundenes Stangenteil (2) und in einem zweiten Federelement (7) ein mit einem Lenkgetriebe verbundenes weiteres Stangenteil (3) der Spurstange (1) befestigt ist und diese Stangenteile (2 und 3) in Federelementen (5 und 7) über Druckfedern (6 und 8) gehalten und von einer örtlich abgestützten Grundstellung (G) in Arbeitsstellungen (A) elastisch und über Anschläge (9, 10 und 16) begrenzt, bewegbar sind.

2. Spurstange nach Anspruch 1, **dadurch gekennzeichnet**, daß die beiden Federelemente (5 und 7) jeweils aus einer zylindrischen Außenhülse (11) und den Stangenteilen (2 und 3) fest verbundenen Elastomerteilen bestehen, die die Stangteile (2 und 3) über eine axiale Länge umschließen.

3. Spurstange nach den Ansprüchen 1 oder 2, **dadurch gekennzeichnet**, daß das radträgerseitige Stangenteil (2) im Federelement (5) in einer Grundstellung (G) über einen stangenseitigen Ringbund (13) abgestützt und in der zylindrischen Außenhülse (11) unter Vorspannung der Druckfeder (6) stehend gehalten ist und zu einer örtlich in der Außenhülse (11) festgesetzten, als Anschlag ausgebildete Scheibe (10) mit einem Abstand (a) gehalten wird.

4. Spurstange nach den Ansprüchen 1, 2 oder 3, **dadurch gekennzeichnet**, daß das lenkgetriebeseitige Stangenteil (3) des zweiten Federelements (7) mit einem stirnseitigen Ringbund (15) in einer Grundstellung (G) unter der Vorspannung der Druckfeder (8) stehend an der als Anschlag ausgebildeten Scheibe (10) abgestützt gehalten ist und der Ringbund (15) mit einem Abstand (b) zu einer örtlich festgesetzten Innenhülse (17) liegt.

5. Einrichtung nach einem oder mehreren der vorhergehenden Ansprüche, **dadurch gekennzeichnet**, daß der Kennung des Federelements (5 und 7) jeweils eine Kennung der Druckfeder (6 und 8) überlagert ist und eine definiert abgestimmte Gesamtkennung aus den Federelementen und den Druckfedern bildbar ist.

6. Spurstange nach einem oder mehreren der vorhergehenden Ansprüche, **dadurch gekennzeichnet**, daß die Anschlagscheibe (10) stirnseitige Druckanschlagflächen für die beiden in den Federelementen (5 und 7) elastisch gehaltenen Stangenteile (2 und 3) bildet.

7. Spurstange nach einem oder mehreren der vorhergehenden Ansprüche, **dadurch gekennzeichnet**, daß Zuganschläge der beiden Stangenteile (2 und 3) einerseits zwischen der Anschlagscheibe (10) und einer Stirnfläche (14) des Stangenteils (2) und andererseits zwischen dem Ringbund (16) und der Innenhülse (17) vorgesehen sind.

8. Spurstange nach einem oder mehreren der vorhergehenden Ansprüche, **dadurch gekennzeichnet**, daß die Stangenteile (2 und 3) alleinig über Spiralfedern in Zug- und Druckrichtung axial elastisch bewegbar in die Grundstellung (G) sowie in Arbeitsstellungen (A) bewegbar gehalten sind.